# EUROPEAN PATENT APPLICATION

(11) **EP 4 643 985 A1**
(43) Date of publication of application: **05.11.2025**
(21) Application number: 23918918.6
(22) Date of filing: 03.02.2023
(51) Int. Cl.: B01J 8/02, C01B 3/26

(54) **APPARATUS FOR GENERATING GREEN HYDROGEN BY MEANS OF CATALYTIC REFORMING OF ALCOHOLS**

(71) Applicant: Delphys Partners S/A, Jardim Paulistano São Paulo (BR)
(72) Inventor: TARCÍSIO DE OLIVEIRA, Lupércio, Belo Horizonte (BR); NICODEMOS DA SILVA, Sidney, Belo Horizonte (BR)
(74) Representative: Lorente Berges, Ana
(86) International application number: PCT/BR2023/050036
(87) International publication number: WO 2024/159282

(57) **Abstract**

The present invention relates to a " DEVICE FOR GREEN HYDROGEN GENERATION VIA CATALYTIC REFORMING OF ALCOHOLS" more specifically to a device comprising two interconnected chambers. In the first chamber, the injected hydroalcoholic solutions are preheated, and then transferred to the second chamber, where molecular catalytic reforming occurs under controlled temperatures ranging from 573 to 873 K, with a water-to-ethanol molar ratio of up to 18:1. In this second stage, hydrogen is generated through a reaction with high-surface-area calcium phosphates acting as catalysts. Preferably, the reactants injected into chamber C1 are ethanol, glycerol, and/or methanol, diluted in water.

## Description

The present invention relates to a "DEVICE FOR GREEN HYDROGEN GENERATION VIA CATALYTIC REFORMING OF ALCOHOLS", specifically to a device composed of two interconnected chambers. In the first chamber, a preheating stage is performed for the injected hydroalcoholic solutions, which are subsequently transferred to a second catalytic reaction chamber. In this second stage, molecular catalytic reforming occurs, producing hydrogen through a reaction with calcium phosphates that feature high surface activity and serve as catalysts under controlled temperature conditions.

### BACKGROUND:

The global energy demand continues to rise exponentially, with no foreseeable decline. This growth is intensified by the environmental issues arising from pollutant emissions associated with conventional energy generation methods, which are still heavily reliant on fossil fuels. Simultaneously, escalating social and regulatory pressures are driving the development of modern, clean, and sustainable energy alternatives.

Within this context, solutions that promote the decarbonization of the economy-aimed at reducing greenhouse gas (GHG) emissions, particularly carbon dioxide (CO₂), the main contributor to climate change-are urgently needed. To mitigate global warming and enable a sustainable future for the planet, a substantial reduction in GHG emissions is imperative. This transition demands the replacement of fossil fuels with renewable energy sources. Among the most promising strategies to facilitate this energy transition toward a low-carbon economy is the use of hydrogen (H₂), both as an industrial feedstock and as a clean alternative to fossil-based energy carriers.

Green hydrogen (H₂V)-a term used when hydrogen is produced from renewable sources-is currently regarded as one of the most promising solutions for a more sustainable industrial and energy generation sector. Hydrogen (H) is the most abundant element in the universe and the fourth most abundant on Earth. However, it is rarely found in its elemental form, typically occurring in compounds such as water (H₂O. Extracting hydrogen as a usable fuel (H₂) requires specialized technologies that often demand substantial energy input.

Green hydrogen not only meets low-carbon criteria but can also be produced using renewable energy sources such as solar, wind, or biomass. One example is the innovative catalytic reforming of alcohols-particularly ethanol, methanol, or glycerol-described herein. The sustainability of hydrogen production is intrinsically tied to the method employed. Catalytic reforming remains one of the most widely adopted techniques for hydrogen production, and is well-suited for processing renewable feedstock, such as primary, secondary, or tertiary alcohols, with minimal adaptation for industrial applications.

Currently, the two most used hydrogen production pathways are grey hydrogen and brown (or black) hydrogen, which utilize natural gas (primarily methane and propane) and coal as feedstocks, respectively. Together, these routes account for approximately 95% of the global hydrogen supply. According to the International Energy Agency (IEA), catalytic reforming of natural gas and/or coal remains economically competitive in terms of production costs. However, despite their cost-effectiveness and large-scale feasibility, these hydrogen sources are derived from non-renewable fossil fuels and are associated with significant carbon dioxide (CO₂) emissions. In contrast, alternative methods such as water electrolysis powered by renewable energy sources (e.g., wind or solar) remain significantly more expensive. The predominant grey hydrogen, although widely used worldwide, presents a major drawback due to its high carbon footprint resulting from fossil fuel extraction.

To enable a successful energy transition, several factors must align: technological advancements in hydrogen production, utilization, transportation, and storage; the establishment of robust regulatory frameworks in both producing and consuming countries; and the implementation of economic policies and incentives to support the development of hydrogen-based value chains-particularly those centered on green hydrogen (H₂V). Once consolidated, this emerging sector is expected to deliver substantial economic and environmental benefits, marking a critical step toward the decarbonization of energy systems.

Moreover, hydrogen combustion does not release CO₂ and generates minimal air pollutants, making it an attractive option for decarbonizing industrial processes and economic sectors where emissions reductions are particularly challenging. Nevertheless, achieving large-scale adoption of green hydrogen remains a significant challenge, primarily due to economic constraints, as the cost of producing H₂V is still relatively high compared to conventional methods.

To overcome these barriers, research efforts have increasingly focused on using hydrogen as an energy carrier, particularly when sourced from biomass or biofuels (such as ethanol) or renewable electricity. In such cases, hydrogen serves as a medium to convert renewable electricity into a form that can be stored and transported, especially when integrated with fuel cell technologies, which efficiently convert hydrogen back into electrical energy.

The emerging green hydrogen (H₂V) market holds enormous potential. Projections suggest that by 2050, hydrogen could account for approximately 20% of the global energy demand. Accordingly, the estimated market value for H₂V in 2050 is around USD 2.5 trillion, roughly equivalent to half the size of today's global oil market.

According to the International Energy Agency (IEA, 2021), global hydrogen demand in 2020 reached approximately 90 million tonnes (Mt), with over 70 Mt used as pure hydrogen and less than 20 Mt blended with carbon-containing gases, primarily for methanol production and steel manufacturing. Nearly all this demand was concentrated on refining and industrial applications. However, most hydrogen is still produced from fossil fuels, leading to an estimated 900 Mt of CO₂ emissions annually.

Hydrogen production via electrolysis remains at an early stage. In 2020, only 0.49 million tonnes of hydrogen were produced through electrolysis, accounting for less than 1% of total hydrogen output. Nonetheless, this scenario is expected to change significantly over the coming years, with electrolysis-based hydrogen production projected to become the dominant route by 2030.

In this context, several technologies currently exist within the state of the art for hydrogen production, with particular emphasis on green hydrogen (H₂V). Among these are processes based on the catalytic reforming of organic compounds. However, the technologies currently identified differ significantly from the present invention in terms of efficiency, production mechanisms, and the design of the equipment and systems used. These distinctions become evident when compared with the most closely related prior art, as described below.

Brazilian Patent PI 0703296-0 refers to the development of catalysts for hydrogen production intended for low-temperature fuel cells, using steam reforming and autothermal reforming of alcohols. The invention discloses ceria-based catalysts, optionally modified with 0.5 to 10 wt% of alkali or alkaline earth metal promoters (Li, Na, K, Rb, Cs, Fr, Be, Mg, Ca, Sr, Ba, Ra), as well as mixed oxides containing cerium and zirconium. These catalysts are used to reform C1-C5 alcohols-particularly ethanol or ethanol blends such as bioethanol-at temperatures ranging from 723 K to 823 K (approximately 450 °C to 550 °C), targeting hydrogen production for low-temperature fuel cell applications.

**PI** 1000656-7 discloses a method for obtaining a catalyst for steam reforming aimed at hydrogen or syngas production. The first objective of the invention is to provide a process for preparing a nickel-based steam reforming catalyst, supported on magnesium aluminates and incorporating an alkaline promoter to enhance catalytic activity. Additionally, the invention describes a method for producing hydrogen or synthesis gas via catalytic steam reforming of hydrocarbons in the presence of the catalyst.

WO 2002/083291 refers to a process and apparatus for the catalytic reforming of hydrocarbons or alcohols into hydrogen through a series of partial reactions. These partial reactions are carried out individually and/or in various combinations within a microreactor network, which includes microreactors and channels that facilitate the flow of reactants and/or the products of these partial reactions. The system is designed to optimize reaction control, heat exchange, and scalability for hydrogen production.

FR 2795339 A1 discloses a process and device for ethanol reforming to produce hydrogen. According to the invention, the hydrogen production process involves the steam reforming of ethanol in the presence of oxygen, at temperatures ranging from 300°C to 800°C. This technology is particularly suited for integration with fuel cell systems, providing a pathway for on-demand hydrogen generation from bioethanol.

It is evident that, in the pursuit of alternative energy sources, there is growing interest in technologies for producing hydrogen and synthesis gas from renewable feedstocks. This does not diminish the relevance of fossil-based processes, which have also seen the development of numerous technologies aimed at improving energy generation efficiency.

Among renewable options, alcohol, particularly ethanol and glycerol, stand out. Ethanol is abundantly produced in Brazil from sugarcane, supported by a well-established distribution infrastructure. Glycerol, in turn, is a byproduct of biodiesel production. These compounds are notable for their favorable stoichiometry and calorific yield in hydrogen generation. As demonstrated, hydrogen and syngas can be produced via steam reforming of ethanol, glycerol, and/or methanol, which has driven increased interest in the development of high-performance catalysts for these reforming processes.

However, no existing technology has been identified that enables molecular catalytic reforming and hydrogen generation using high-surface-area calcium phosphates in a segmented apparatus comprising two interconnected chambers. It is precisely within this technological gap that the present invention positions itself. The objectives, functionalities, and inventive features of this apparatus will be further clarified in the detailed description that follows, in conjunction with the accompanying figures, wherein:

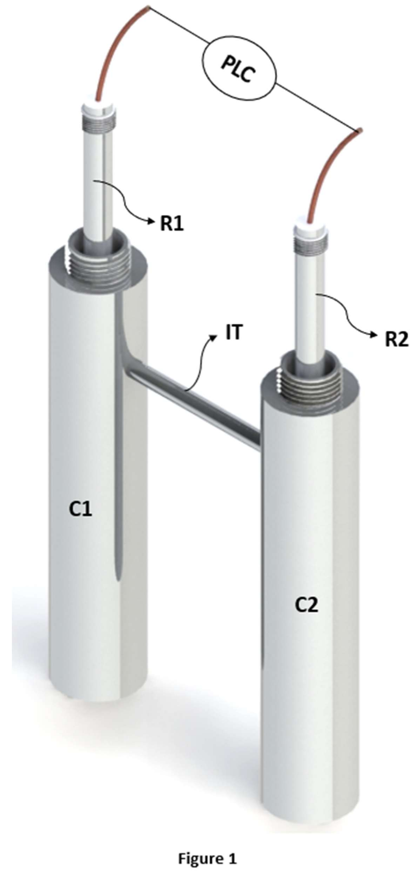

**Figure 1** presents a schematic isometric view of the *Apparatus for Green Hydrogen Production via Catalytic Reforming of Alcohols,* identifying the main components: a preheating chamber (C1), movable heating element 1 (R1), a catalytic reforming chamber (C2), movable heating element 2 (R2), and the interconnecting tube (IT) between the two chambers. The entire system is interfaced with a programmable logic controller (PLC) for temperature and flow rate control.

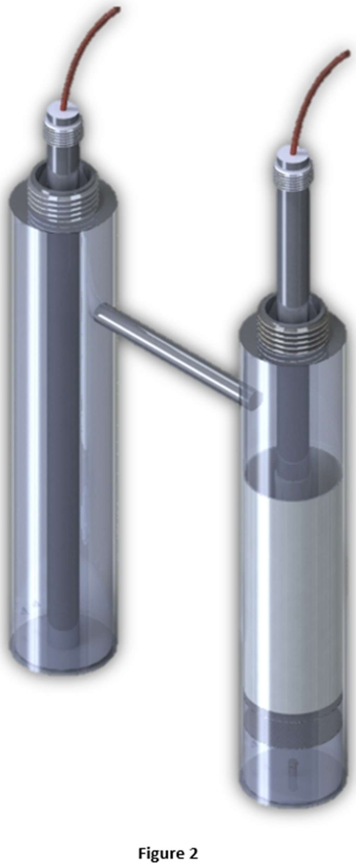

**Figure 2** shows another schematic isometric view of the same apparatus, with transparent external walls, to expose and highlight the internal components of the system.

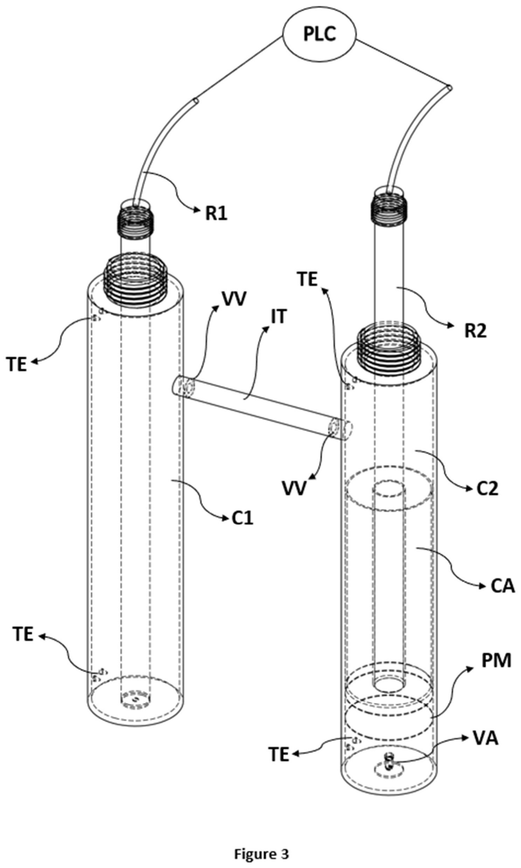

**Figure 3** depicts a line-based isometric schematic view of the apparatus, again with transparent external surfaces, allowing for the identification of internal elements. These include preheating chamber (C1), movable heating element 1 (R1), catalytic reforming chamber (C2) featuring a sub-chamber (CA) designed for catalyst placement, movable heating element 2 (R2), interconnecting tube (IT), thermostats (TE), a porous membrane (PM), a pressure and flow control valve (VV), and a flame arrestor valve (VA). The entire setup is integrated with a programmable logic controller (PLC) to ensure precise regulation and process automation.

### DETAILED DESCRIPTION:

The Apparatus for Green Hydrogen Production via Catalytic Reforming of Alcohols, as described, comprises a device featuring two interconnected chambers. In the first chamber (C1), the injected fuels are preheated, and their vapors are subsequently transferred to the second chamber (C2). In this second stage, under a temperature setpoint regulated by the programmable logic controller (PLC), molecular catalytic reforming takes place, producing hydrogen through a reaction with high-surface-area calcium phosphates acting as catalysts.

All process parameters-temperature, pressure, and flow rate-are monitored and controlled via a pre-programmed SetPoint system embedded in the PLC, which is integrated into the apparatus. Temperature readings are captured by thermostats located in both chambers (C1 and C2), while flow and pressure are managed through valves (VV) located in the interconnecting tube (IT). Based on the predefined SetPoint, the PLC will actuate to either release or retain the reaction products. Additionally, at the hydrogen gas outlet in chamber C2, a flame arrestor valve (VA) ensures safety during operation.

Heating within C1 is preferably achieved with a movable heating element (R1), which is modular and easily integrated into the apparatus structure. The optimal operating temperature depends on the specific fuel used and may reach up to 700 °C, ensuring effective vaporization and reforming conditions.

In chamber C2, an additional movable heating element (R2) may be optionally installed to maintain the optimal reaction temperature. This chamber also houses the catalytic media, composed of calcium phosphate or apatite-based catalysts for the catalytic reforming of alcohols. These catalysts are allocated within the catalyst compartment (CA) and may optionally be doped with transition metals to enhance their activity. A preferred embodiment involves nickel-doped hydroxyapatite (Ni-HAp), although doping with cobalt (Co) or nickel-manganese (Ni-Mn) is also considered. The concentration of dopant (c) ranges from 0.5 < c < 5.0 wt%, with a preferred range between 1-2 wt%.

The shape and arrangement of the catalysts within chamber C2 are tailored to maximize physicochemical and adsorptive characteristics, such as surface area and porosity, thereby improving the reaction kinetics through direct contact between calcium phosphate granules and the reactants. The catalytic reforming process relies heavily on surface thermodynamics, where high specific surface area and surface reactivity are critical for performance. For this reason, the use of porous spherical granules is recommended, with particle diameters (x) in the ranges of 0.5 < x < 1.0 mm, 1.0 < x < 2.0 mm, and 2.0 < x < 4.0 mm, preferably between 1.0 mm and 2.0 mm. These spheres are designed to be easily replaceable through a simple disassembly of the reactor unit.

The preferred reactants injected into chamber C1 are alcohol, specifically ethanol, glycerol, and/or methanol, diluted in water at varying molar ratios. A key advantage of this invention, which enables highly efficient and clean hydrogen generation, lies in the fact that the hydrogen originates primarily from the water molecules (H₂O. The alcohols function mainly as heterogeneous reaction promoters, enhancing the kinetic performance of green hydrogen (H₂V) production without being the primary hydrogen source.

In summary, the present invention enables the catalytic reforming of hydroalcoholic solutions through a low-cost and operationally simplified apparatus (as illustrated in the drawings), under optimized conditions that consider the surface properties of the catalyst (calcium phosphates or doped calcium phosphates). These optimized parameters include the mass or molar ratios of the reactant solutions, flow rate relative to the mass of catalysts employed, and the temperature and pressure within chamber C2, ensuring the effective progression of the reforming reactions and the subsequent separation of the resulting gas mixture.

Additionally, the invention optimizes the physicochemical parameters governing hydrogen production, which involve surface thermodynamic processes catalyzed by a non-consumable ceramic catalyst (calcium phosphates or their doped variants). The process is based on the steam reforming of organic compounds that contain a hydroxyl functional group (-OH) attached to one or more saturated carbon atoms. In this heterogeneous catalytic reforming, the hydrated vapors of primary alcohols-where the hydroxyl group is bonded to a terminal carbon (e.g., ethanol C₂H₅OH or methanol CH₃O)-as well as secondary and tertiary alcohols, where the hydroxyl is bonded to internal or branched carbons, are utilized to produce gaseous hydrogen (H₂.

Examples of reaction pathways involving ethanol and the combination of different reforming processes for hydrogen production include: **Steam reforming:** xC₂H₅OH + yH₂O ↔ wCO + zH₂; **Partial oxidation:** xC₂H₅OH + yO₂ ↔ wCO + zH₂; **Autothermal reforming:** a combination of partial oxidation and steam reforming; **Dry reforming (with CO₂):** xC₂H₅OH + yCO₂ ↔ wCO + zH₂ These physicochemical reactions, which occur inside the apparatus, proceed mainly through displacement mechanisms (double exchange or metathesis) and are governed by process parameters such as mass flow rates of reactants, reaction temperature, and partial pressure within the reactor (e.g., T = 450-500 °C; ethanol-to-water mass ratio up to 7.0). Following the reforming process, the separation of H₂ from CO and other by-products (such as CO₂, CH₄, and O₂) is performed downstream using commercial membrane systems (PM) with selective permeability and high separation factors, allowing efficient purification of hydrogen from the gas mixture.

Regarding the **thermodynamic analysis,** in the temperature range of **573-873 K,** alcohols are **completely converted into H₂, CO, CO₂, and CH₄.** This behavior results from a series of **endothermic reactions,** including **Reaction 1:** thermal decomposition of glycerol or tertiary alcohols, **Reaction 2:** steam reforming of methane, and **Reaction 3:** dry reforming of methane with CO₂.

At lower temperatures, CO₂ production is favored, while higher temperatures promote greater CO formation, a trend supported by the exothermic water-gas shift reaction (Reaction 4), which converts CO₂ and H₂ into CO and H₂O.

These reactions will be detailed in the following section.

(R1) C3H8O → 3CO + 4H2

(R2) CH4 + H2O → CO + 3H2

(R3) CH4 + CO2 → 2CO + 2H2

(R4) CO + H2O → CO2 + H2

The operating parameters of the apparatus-such as temperature, pressure, and flow rate control-are defined based on the catalysts employed, which may include calcium phosphate-based materials such as hydroxyapatite (HA), β-tricalcium phosphate (β-TCP), amorphous calcium phosphates, apatites, and monetite, as well as calcium phosphates doped with transition metals like nickel (Ni), cobalt (Co), manganese (Mn), rare earth elements, or combinations thereof. These materials are particularly suitable due to the low cost and ready availability of processing routes for these ceramic catalysts. Alternatively, the system may employ different support materials or catalyst matrices, including alumina (Al₂O₃), silica (SiO₂), zirconia (ZrO₂), zeolites, hydrotalcite, and other ceramic materials. However, it is important to note that these alternative materials exhibit lower catalytic efficiency when compared to the high-surface-area calcium phosphate systems described above.

### Examples

One key application of this innovation is the sustainable large-scale production of green hydrogen via ethanol steam reforming, specifically for direct reduction of metal ores, with particular emphasis on the processing of iron ores to produce sponge iron, also known as direct reduced iron (DRI). The conversion of ethanol into hydrogen for metallurgical applications-as well as for other uses such as hydrogen-powered electric vehicles using fuel cells-has been enhanced through the use of the patented apparatus operating with calcium phosphate-based catalysts (e.g., nickel-doped hydroxyapatite), within the temperature range of 573-873 K, and employing a water-to-ethanol molar ratio of 17.7:1.

Thermodynamic analysis based on Gibbs free energy minimization, supported by experimental data, confirmed the efficiency of the synthesized catalysts. Catalytic activity is relatively low in the 373-523 K range; however, it improves significantly at 573-823 K, yielding hydrogen concentrations of 68% and 95%, respectively. In contrast, in the absence of a catalyst, hydrogen concentration remains below 35% even at 873 K, clearly demonstrating that catalytic efficiency is highly dependent on the use of calcium phosphates. The effective performance at sub-873 K temperatures confirms the economic and environmental viability of using Ni-, Co-, Mn-, or rare earth-doped calcium phosphates in reformers designed for direct iron ore reduction, particularly in decarbonized steel production.

Finally, it is emphasized that variations and adaptations in the dimensions, configurations, and components of the apparatus are possible. The descriptive content of this document should not be interpreted as limiting, but rather as illustrative. Constructive modifications that would be evident to those skilled in the art are considered within the scope of this invention, provided they do not depart from its fundamental principles or intended protection.

## Claims

1. DEVICE FOR GREEN HYDROGEN GENERATION VIA CATALYTIC REFORMING OF ALCOHOLS, comprising a first chamber (C1), in which the injected hydroalcoholic solutions are preheated, and a second chamber (C2), connected via an interconnecting tube (IT), where catalytic reforming of alcohol vapors occurs through contact with porous calcium-phosphate spheres arranged within a subchamber (CA) inside (C2).

2. DEVICE FOR GREEN HYDROGEN GENERATION VIA CATALYTIC REFORMING OF ALCOHOLS according to claim 1, wherein chamber (C2) further includes a movable heating element (R2) to heat and/or maintain the temperature of the alcohol vapors; selective-permeability membranes (PM) for separating hydrogen from other gases; and a flame arrestor valve (VA) at the hydrogen outlet.

3. DEVICE FOR GREEN HYDROGEN GENERATION VIA CATALYTIC REFORMING OF ALCOHOLS, according to claims 1 and 2, wherein a programmable logic controller (PLC) is embedded to regulate and maintain the predefined parameters of operation, including temperature-measured by thermostats (TE) in chambers (C1) and (C2)-and gas flow and pressure, monitored through valves (VV) positioned in the interconnecting tube (TC).

4. DEVICE FOR GREEN HYDROGEN GENERATION VIA CATALYTIC REFORMING OF ALCOHOLS, according to claim 1, wherein the porous calcium-phosphate spheres, preferably hydroxyapatite, have diameters x within the ranges of 0.5 < x < 1.0 mm, 1.0 < x < 2.0 mm, and 2.0 < x < 4.0 mm, more preferably between 1 mm and 2 mm, and are optionally doped with transition metals, preferably nickel, and alternatively cobalt or nickel-manganese combinations, in concentrations (c) ranging from 0.5 to 5.0 wt%, preferably from 1 to 2 wt%.

5. DEVICE FOR GREEN HYDROGEN GENERATION VIA CATALYTIC REFORMING OF ALCOHOLS, according to claim 1, wherein the generated green hydrogen (H₂V) is intended for use in commercial direct reduction systems for iron ore (DRI), as well as in other applications such as hydrogen fuel cell-powered electric vehicles.
